# EUROPÄISCHE PATENTANMELDUNG

(11) **EP 1 787 717 A1**
(43) Veröffentlichungstag der Anmeldung: **23.05.2007**
(21) Anmeldenummer: 06123899.4
(22) Anmeldetag: 13.11.2006
(51) Int. Cl.: B01J 19/00, C12Q 1/68

(54) **Strukturierbarer Polymer-Schichtverbund für Biomoleküle, Verfahren zu seiner Herstellung und Anwendung**

(30) Priorität: 17.11.2005 DE 102005056016
(71) Anmelder: Leibniz-Institut für Polymerforschung Dresden e.V., 01069 Dresden (DE)
(72) Erfinder: Voit, Brigitte, 01187 Dresden (DE); Sieczkowska, Barbara, 01159 Dresden (DE); Millaruelo Boira, Martha, 01069 Dresden (DE); Opitz, Jörg, 01229 Dresden (DE); Voigt, Jan, 01156 Dresden (DE); Pompe, Wolfgang, 01737 Hartha (DE); Mertig, Michael, 01169 Dresden (DE)
(74) Vertreter: Rauschenbach, Marion

(57) **Zusammenfassung**

Die Erfindung bezieht sich auf das Gebiet der Bionanotechnologie und betrifft einen strukturierbaren Polymer-Schichtverbund, wie er beispielsweise in DNA-Arrays zur Anwendung kommen kann.

Die Aufgabe der vorliegenden Erfindung besteht in der Angabe eines strukturierbaren Polymer-Schichtverbundes, bei welchem eine hohe orts- und endspezifischen Immobilisierung von Biomolekülen ausschließlich auf Goldkontakten, erreicht wird .

Gelöst wird die Aufgabe durch einen Polymer-Schichtverbund aus einem Substrat auf dem eine vollständige oder strukturierte Goldschicht vorhanden ist, die wiederum mindestens teilweise von einer strukturierbaren Aminoterpolymerschicht bedeckt ist und darauf wiederum mindestens teilweise Biomoleküle mindestens ortsspezifisch immobilisiert sind.

Die Aufgabe wird weiterhin durch ein Verfahren gelöst, bei dem auf ein Substrat ein Goldschicht aufgebracht wird, diese mit einer Aminoterpolymerschicht beschichtet, nachfolgend die Oberfläche teilweise einer UV-Strahlung ausgesetzt wird und danach Biomoleküle mit der bestrahlten Oberfläche in Kontakt gebracht werden.

## Beschreibung

Die Erfindung bezieht sich auf das Gebiet der Chemie und Bionanotechnologie und betrifft einen strukturierbaren Polymer-Schichtverbund, wie er beispielsweise in DNA-Arrays und Sensoren zur Anwendung kommen kann und ein Verfahren zu seiner Herstellung.

Bekanntermaßen ist Gold ein Substrat für die Immobilisierung von Biomolekülen allgemein und DNA im Besonderen. Dabei können die Goldkontakte vorteilhafterweise gleich auch als Elektroden eingesetzt werden. Ein weiterer Vorteil ist, dass Gold chemisch wenig reaktiv ist.
Um DNA-Moleküle und auch andere Biomoleküle auf diesen Goldkontakten zu immobilisieren, werden die Biomoleküle mit Thiol-Gruppen funktionalisiert, die wiederum eine Bindung mit dem Gold eingehen und damit die DNA und die anderen Biomoleküle an die Goldkontakte bindet (M. Mertig, u.a., Science Technica, Inc. 2004, pp. 132-145). Diese kovalente Bindung über die Thiol-Gold-Brücke ist sehr stabil (M.D. Porter u.a., J. Am. Chem. Soc. 109, (1987) 3559-3568; A. Ulman, Chem. Rev. 96, (1996) 1533-1554).

Diese direkte Anbindung von Thiol-Gruppen an Goldkontakte ist ein bekanntes Verfahren (A.B. Steel, u.a., Biophy.J 79 (2000) 975-981; T. Aqua, u.a., Langmuir 19 (2003) 10573-10580).
Andere Verfahren nutzen die Funktionalisierung der Goldkontakte durch chemische Modifikation, um DNA oder andere Biomoleküle durch andere aktive Gruppen, wie beispielsweise Carboxylgruppen, zu immobilisieren (C.E. Jordan, u.a., Anal. Chem. 69 (1997) 4939-4947). Ein weiteres Verfahren nutzt einen komplexen mehrstufigen chemischen Prozess, um DNA-Arrays auf einer Goldkontaktfläche zu erzeugen (J.M. Brockman, u.a., J. Am. Chem. Soc. 121 (1999) 8044-8051).

Weiterhin bekannt ist ein Verfahren zur ortsspezifischen Anbindung von DNA an lokal durch ultraviolettes Licht (UV-Licht) entschützte Aminoterpolymerfilme auf Glas- oder Siliciumoberflächen (B. Voit, u.a., Polymers for microelectronics and nanoelectronics, Eds. Q. Lin, R.A. Pearson, J.C. Hendrick, ACS Symposium Series 874, Oxford University Press 2004, p. 118-128; J. Opitz, u.a., Nanotechnology 15 (2004) 717-723). Die eingesetzten Aminoterpolymere bestanden aus einer Silan-Ankergruppe, einem Spacer-Polymer und einer geschützten Aminogruppe. Die Ankergruppe stellte eine kovalente Bindung zwischen Glas- oder Siliciumoberfläche und dem Polymerfilm her. Die geschützten Aminogruppen sind UV-labil und können durch eine Strukturierung, beispielsweise durch eine Maske, und durch UV-Bestrahlung gezielt entschützt werden. Die entschützten Bereiche binden nun durch elektrostatische Wechselwirkung die DNA an.
Es ist weiterhin bekannt, durch beispielsweise Steuerung des pH-Wertes die Anbindung der DNA endspezifisch zu gestalten und diese dann als Templatstrukturen zum Aufbau einer molekularen Elektronik zu nutzen (M. Mertig, u.a., Nanobiotechnology - Concepts, Applications and Perspectives, Ed. by C.M. Niemeyer, C.A, Mirkin, WILEY-VCH Verlag GmbH & Co. KgaA, Weinheim 2004, p. 256-277).

Der Nachteil der bekannten Lösungen ist eine unzureichende Strukturierung der orts- und endspezifischen Anbindung von Biomolekülen und insbesondere von DNA auf Goldkontakten.

Die Aufgabe der vorliegenden Erfindung besteht in der Angabe eines strukturierbaren Polymer-Schichtverbundes, bei welchem eine hohe Immobilisierung verbunden mit einer hohen orts- und/oder endspezifischen Anbindung von Biomolekülen allgemein und DNA im Besonderen, ausschließlich auf Goldkontakten, erreicht wird und in der Angabe eines einfachen und mit hoher Ausbeute arbeitenden Verfahrens zur Herstellung derartiger strukturierbarer Polymer-Schichtverbunde.

Die Aufgabe wird durch die in den Ansprüchen 1 und 15 und 26 angegebene Erfindung gelöst. Vorteilhafte Ausgestaltungen sind Gegenstand der Unteransprüche.

Der erfindungsgemäße Polymer-Schichtverbund besteht aus einem Substrat auf dem eine vollständige oder strukturierte Goldschicht vorhanden ist, die wiederum mindestens teilweise von einer strukturierbaren Aminoterpolymerschicht bedeckt ist und darauf wiederum mindestens teilweise Biomoleküle mindestens ortsspezifisch immobilisiert sind. Dabei enthalten das oder die Polymere der Aminoterpolymerschicht Haftgruppen und geschützte Aminogruppen. Weiterhin sind mindestens mittels UV-Strahlung entschützte Aminogruppen im Aminoterpolymer vorhanden, an die Biomoleküle mittels chemischer und/oder physikalischer Bindungen immobilisiert sind.

Vorteilhafterweise ist als Substrat Glas, Metall, Silicium oder Keramik vorhanden.

Ebenfalls vorteilhafterweise ist zwischen Substrat und Goldschicht eine Haftschicht vorhanden, die noch vorteilhafterweise eine Chromschicht ist.

Weiterhin vorteilhafterweise ist die Goldschicht gleichzeitig als Elektrode eingesetzt.

Auch vorteilhafterweise enthält die Polymerschicht als Haftgruppe Tiol, Disulfid, oder andere schwefelhaltige Ankergruppen.

Von Vorteil ist auch, wenn die Polymerschicht als entschützte Aminogruppen primäre, aliphatische Aminogruppen enthält.

Ebenfalls von Vorteil ist es, wenn mittels UV-Strahlung strukturierte Bereiche mit entschützten Aminogruppen vorhanden sind.

Weiterhin von Vorteil ist es, wenn die Strukturierung der Goldschicht nur teilweise oder gar nicht mit der Strukturierung der Bereiche der entschützten Aminogruppen übereinstimmt.

Auch von Vorteil ist es, wenn als Biomoleküle DNA, Proteine oder Enzyme immobilisiert sind.

Vorteilhaft ist auch, wenn die Biomoleküle endspezifisch an den entschützten Aminogruppen immobilisiert sind.

Ebenfalls vorteilhaft ist es, wenn beide Enden der Biomoleküle endspezifisch auf gleiche oder unterschiedliche Bereiche der strukturierten entschützten Aminogruppen immobilisiert sind.

Weiterhin vorteilhaft ist es, wenn die Anbindung des Aminoterpolymers mittels elektrostatischer Wechselwirkungen und/oder über eine Schwefelbrückenbindung an die Goldoberfläche erfolgt.

Und auch vorteilhaft ist es, wenn die Anbindung der Biomoleküle mittels elektrostatischer Wechselwirkung oder mittels Ausbildung einer Amid-Bindung erfolgt

Bei dem erfindungsgemäßen Verfahren zur Herstellung eines Polymer-Schichtverbund wird auf ein Substrat ein Goldschicht aufgebracht, diese mit einer Aminoterpolymerschicht beschichtet, nachfolgend die Oberfläche teilweise einer UV-Strahlung ausgesetzt und danach werden Biomoleküle mit der bestrahlten Oberfläche in Kontakt gebracht.

Vorteilhafterweise wird die Goldschicht strukturiert aufgebracht.

Weiterhin vorteilhafterweise wird die Strukturierung der Goldschicht durch Bedampfen, CVD-Verfahren, Tauchen, Besprühen mittels einer Maske durchgeführt.

Ebenfalls vorteilhafterweise wird die Goldschicht in Dicken von 2 bis 200 nm aufgebracht.

Auch vorteilhafterweise wird die Aminoterpolymerschicht nur auf die Goldschicht oder nur auf die strukturierte Goldschicht oder nur teilweise auf die Goldschicht aufgebracht.

Von Vorteil ist weiterhin, wenn die Aminoterpolymerschicht in Dicken von 1 bis 50 nm aufgebracht wird.

Ebenfalls von Vorteil ist es, wenn die UV-Bestrahlung der Oberfläche der Aminoterpolymerschicht mittels einer Maske strukturiert durchgeführt wird.

Weiterhin von Vorteil ist es, wenn die UV-Bestrahlung mit UV-Licht einer Wellenlänge von 200-400 nm und innerhalb einer Zeit von 1 s bis 30 min durchgeführt wird.

Vorteilhaft ist es auch, wenn die bestrahlte Oberfläche der Aminoterpolymerschicht mittels Besprühen, Bedampfen, Tauchen mit Biomolekülen in Kontakt gebracht wird.

Auch vorteilhaft ist es, wenn die Biomoleküle in einer Lösung mit der bestrahlten Oberfläche in Kontakt gebracht werden.

Weiterhin vorteilhaft ist es, wenn die endspezifische Immobilisierung der Biomoleküle über den pH-Wert des Kontaktmediums mit der bestrahlten Oberfläche gesteuert wird.

Erfindungsgemäß werden die erfindungsgemäßen Polymer-Schichtverbunde als Bio-Chip, DNA-Chip, Sensor oder Analyse-Array oder als Bestandteil eines Bio-Chips, DNA-Chips, Sensors oder Analyse-Arrays oder zur Hybridisierung von DNA-Oligimeren oder von DNA-Netzwerken oder in der molekularen Elektronik verwendet.

Vorteilhafterweise werden die erfindungsgemäßen Polymer-Schichtverbunde für den Nachweis der Immobilisierung mittels SPR und/oder massensensitiver Piezo-Sensoren verwendet.

Weiterhin vorteilhafterweise werden die erfindungsgemäßen Polymer-Schichtverbunde für den Fall verwendet, dass es sich bei dem zu analysierenden Signal um die Hybridisierung von DNA-Oligomeren handelt.

Ebenfalls vorteilhafterweise werden die erfindungsgemäßen Polymer-Schichtverbunde für die Herstellung von DNA-Netzwerken an Goldkontakten verwendet.

Die erfindungsgemäße Lösung kombiniert an sich bekannte Verfahrensweisen für neue Materialien und erreicht ein Potential, welches weit über die Möglichkeiten bisher bekannter Verfahren hinausgeht. Der erfindungsgemäße Schichtaufbau verfügt über eine Variationsbreite der Möglichkeiten der Anordnung der einzelnen Schichten, die mit bisherigen Aufbauten nicht erreichbar ist. Es wird dadurch möglich, die Strukturierung der Polymerschicht und damit die ortspezifische Immobilisierung der Biomoleküle abzukoppeln von der Strukturierung der Goldschicht. Damit müssen erstmal die Goldstrukturen und die Strukturen der Biomoleküle geometrisch nicht mehr übereinstimmen. Somit ist eine zweite, biologische Ebene auf dem Substrat entstanden. Dadurch ergeben sich neue Möglichkeiten bei der Detektion von Biomolekülen und auch neue Anwendungen in Richtung der Verwendung von DNA und Biomolekülen für den Aufbau einer neuartigen molekularen Elektronik.

Das wachsende Interesse an der Möglichkeit des Aufbaus einer molekularen Elektronik führt zu einem Interesse der spezifischen Einbindung von Biomolekülen in Kontaktstrukturen. Das erfindungsgemäße Verfahren erreicht diese spezifische Anbindung.
Durch die spezifische Anbindung der Haftgruppe des Aminoterpolymer an die Goldschicht beispielsweise über Schwefelbrückenbindungen wird eine für die gewünschten Anwendungen ausreichend feste Verbindung des erfindungsgemäß vorhandenen Aminoterpolymers an der Goldschicht erreicht. Weiterhin besitzt das Aminoterpolymer geschützte Aminogruppen, die durch UV-Licht entschützbar sind. Nachdem die Aminoterpolymerschicht auf der Goldschicht fest haftet, wird die Oberfläche der Aminoterpolymerschicht über eine Maske mit UV-Licht bestrahlt. Dadurch werden die sich in den belichteten Bereichen befindlichen Aminogruppen entschützt und sind die reaktiven Zentren, die zur spezifischen Immobilisierung der Biomoleküle zur Verfügung stehen. Dabei soll unter spezifischer Immobilisierung der Biomoleküle eine orts- und endspezifische Immobilisierung unter Ausnutzung chemischer und/oder physikalischer Bindungen, wie vorteilhafterweise elektrostatischer Wechselwirkungen oder mittels Ausbildung einer Amid-Bindung, verstanden werden. Die Biomoleküle lassen sich durch die Wahl der Strukturierung der Maske ortsspezifisch auf der Oberfläche der Aminoterpolymerschicht immobilisieren. Weiterhin kann durch die Wahl des Kontaktmediums, beispielsweise eines Lösungsmittels, die Immobilisierung so gesteuert werden, dass die Biomoleküle vorteilhafterweise endspezifisch, dass heißt mit einem oder beiden Enden an den Aminogruppen immobilisiert werden.

Durch die erfindungsgemäße Lösung ergeben sich Vorteile für den mikrostrukturierten Aufbau von DNA-oder Bio-Chips, mit deren Hilfe in großen Arrays die Analyse von zu untersuchenden Biomolekülen, z.B. von DNA mit verschiedenen Sequenzen durchgeführt werden kann. Weiterhin kann durch den großen Vorteil der vorliegenden Erfindung, durch das sequentielle Entschützen der Aminogruppen in der Aminoterpolymerschicht ein weitgehend flexibler Aufbau von komplexen Arrays mit nanostrukturierten Nachweisflächen erreicht werden. Da der darunter liegende Goldfilm in die Strukturierungsprozesse der Aminoterpolymerschicht nicht direkt mit einbezogen ist, ist die erfindungsgemäße Lösung auch besonders geeignet für das Auslesen von Chips mittels SPR-Methoden (SPR - Surface Plasmonen Resonance).

Die Strukturierung mittels UV-Licht bietet weiterhin den Vorteil des Einsatzes von parallelen Belichtungsverfahren, wie z.B. von Maskentechniken, die in der Halbleiterindustrie genutzt werden. Ein weiterer Vorteil der erfindungsgemäßen Lösung liegt in der erreichbaren Strukturbreite auf nanoskopischen Goldflächen begründet. Das Verfahren ist nur durch die Wellenlänge des UV-Lichtes limitiert und kann damit im Bereich von einhundert Nanometern liegen. Für die UV-Bestrahlung kann beispielsweise eine Hg-Dampflampe oder ein UV-Laser eingesetzt werden. Bei Einsatz eines UV-Lasers kann die Entschützung der Aminogruppen sowohl im optischen Fern- als auch Nahfeld durchgeführt werden.
Andererseits kann die Entschützung der Aminogruppen auch lokal durch eine Belichtung über ein Lichtleiterkabel vorgenommen werden. Dabei ist die erreichbare Größe der Strukturierung durch die Wellenlänge des verwendeten Lichtes und vom Durchmesser der eingesetzten Lichtleiterfaser bestimmt. Der Vorteil dieses Verfahrens besteht u.a. darin, dass es möglich ist, in einem ersten Schritt DNA an einem vorher entschützten Bereich zu immobilisieren und in einem zweiten Schritt einen zweiten Bereich in der Nachbarschaft mittel einer anderen Maske zu entschützten und dort eine weitere DNA oder die erste DNA mit ihren anderen freien Ende anzubinden. Diese Methodik der Diskriminierung zwischen unterschiedlichen Kontaktpunkten erlaubt die Anbindung von DNA verschiedener Länge in räumlich getrennter vorher bestimmter Art und Weise.

Eine weitere Möglichkeit der vorteilhaften Einflussnahme besteht in der Variation des pH-Wertes der Umgebung während der Immobilisierung der Biomoleküle. Der pH-Wert beeinflusst die Protonierung der Aminogruppe im Aminoterpolymer. Somit kann dadurch und durch die Steuerung der Prozessparameter das spezifische Anbindeverhalten der Biomoleküle gesteuert beeinflusst werden. Beispielsweise bindet eine DNA im Bereich der Lösung von pH 7,0 bis 7,5 über die gesamte Länge an die entschützten Bereiche an. Bei einem pH-Wert der Lösung von 8,0 bis 8,5 binden die DNA-Moleküle im Wesentlichen endspezifisch an. Damit steht der Rest des Moleküls für eine weitere Manipulation zur Verfügung. Der Nachweis zur endständigen Anbindung kann beispielsweise durch Streckung des Moleküls zur Konturlänge mit Hilfe eines sich zurückziehenden Meniskus erfolgen.

Das Aminoterpolymer kann beispielsweise durch Polymerisation freier Radikale synthetisiert werden. Alternativ können alle oder ein Teil der Funktionsgruppen auch über eine polymeranaloge Reaktion an entsprechenden Präpolymeren eingebracht werden. Für die Copolymerisation werden drei Komponenten im entsprechenden molaren Verhältnis eingesetzt. Die Komponenten können sein eine polymerisierbare photolabile, geschützte Aminogruppeneinheit (NVOC), eine Monomer mit einer Disulfidderivat-Ankergruppe und Methylmethacrylat oder Styren als Filmbildner. Die Polymere werden dann durch Precipitation in Ethanol isoliert. Die Zusammensetzung der Komponenten des Aminoterpolymers kann frei gewählt werden, so dass sowohl die Menge der Haftgruppen eingestellt werden kann, je nach gewünschter Filmdicke, als auch die Anzahl der aktiven Aminogruppen.
Im Gegensatz zu Self-Assembly Monolayern (SAM), also Schichten, die aus niedermolekularen Verbindungen hergestellt werden, gelingt es mit der erfindungsgemäßen Lösung sicherzustellen, dass das Substrat mit der jeweils gewünschten Bedeckung, aber vorteilhafterweise auch vollständig bedeckt ist. Es werden zudem Polymerschichten von mindestens 2 nm, meist aber 10-50 nm erzeugt, die sehr robust sind und bei der weiteren Anwendung sicher an den Goldkontakten gebunden bleiben.
In SAM-Schichten kann bei Einbringen einer sterisch anspruchsvollen Kopfgruppe (z.B. der geschützten Aminofunktionalität) keine geordnete Schicht auf dem Substrat erzeugt werden bzw. es erfolgt keine vollständige Belegung des Substrates mit der Funktionsschicht. In den erfindungsgemäß erzeugten dickeren Polymerschichten ist sichergestellt, dass ausreichend Aminofunktionalitäten in die Polymerketten eingebaut werden und vorteilhafterweise auch mehrlagig auf das Substrat aufgebracht werden können, so dass an allen Stellen der Polymerschicht Funktionalitäten zur Entschützung und späteren weiteren Nutzung zur Verfügung stehen.

Im Weiteren wird die Erfindung an einem Ausführungsbeispiel näher erläutert.

### Beispiel 1

Auf einen Siliciumwafer mit den Abmessungen 24 x 24 mm, der bereits mit einer 3 nm dicken aufgedampften Chromschicht zur Verbesserung der Haftung aufgebracht ist, werden 5x400x400 Goldkontakte mittels Bedampfen mit einer Maske aufgebracht. Die Goldkontakte haben die Abmessungen LängexBreitexHöhe von 10µmx10µmx 90nm. Der Abstand zwischen den Kontakten beträgt 14 µm.

Das mittels Polymerisation freier Radikale synthetisierte Aminoterpolymer aus {N-(N-NVOC-aminopropyl)methacrylamide)}, {1,2-dithiolane-3-pentanoic acid-2-[(2-methyl-1-oxo-2-propenyl)oxy]ethyl ester}, and methylmethacrylate (20/5/75) liegt als gelöstes Polymer in Tertahydrofuran (THF) vor und wird mittels Spinncoating auf den Siliciumwafer und auf die Goldkontakte aufgebracht. Die Dicke der aufgebrachten Polymerschicht kann mittels AFM und Ellipsometrie ermittelt werden und beträgt durchschnittlich 8-13 nm. Die mittels AFM ermittelten Rauhigkeiten der Goldkontakte und der Polymerschicht entsprachen einander.

Nachfolgend wird die Polymeroberfläche mit einer Maske abgedeckt und die offenen Bereiche mit einem UV-Laser (HeCd-CW-Laser, Kimmon IK5651 R-G) mit 24 mW bei der Wellenlänge von 325 nm und mit 69 mW bei der Wellenlänge von 441,6 nm im optischen Nahfeld belichtet.
Die Maske weist 400x400 regelmäßig angeordnete quadratische Öffnungen mit den Abmessungen von 50µmx50µm auf, wodurch die Anordnung der Goldkontakte nur teilweise mit der Anordnung der Bereiche der entschützten Aminogruppen übereinstimmte.

Nach der Strukturierung der Aminoterpolymerschichten werden 0,1 µM YOYO-1-Lösung für 20 s auf den Schichten inkubiert. Am Fluoreszenzmikroskop (Axiovert 200M, Carl Zeiss) konnte die Anbindung des Farbstoffes an die Oberfläche quantifiziert werden. Da YOYO-1 selbst zwei Aminogruppen besitzt, wird die Anbindung an die entschützten Bereiche auf Grund der elektrostatischen Abstoßung unterdrückt. Der Farbstoff kann somit nur an geschützte Bereiche anbinden. Es ergibt sich ein invertiertes Abbild der Maske in den Polymerfilmen. Das endspezifische Fluoreszenzsignal ist zwar 100- bis 500-fach geringer als bei spezifischer Anlagerung an DNA, zeigt aber klar, dass eine Strukturierung im Mikrometerbereich erreicht wird.

Es konnte gezeigt werden, dass eine hohe ortsspezifische Anbindung von Biomolekülen an lokal entschützte Goldkontakte möglich ist. Dafür wurden 2 µg/ml Lösung von Lachsspermien-DNA für 60 s auf den strukturierten Schichten inkubiert. Die Länge der Lachsspermien-DNA beträgt zwischen 500 und 5000 Basenpaare. Der pH-Wert des Puffers wurde zwischen 7,5 und 8,8 variiert. In diesem Bereich bindet die DNA spezifisch an die entschützten Bereiche an. Es ergibt sich ein direktes Abbild der Maske auf den Goldstrukturen, da das Fluoreszenzsignal der spezifisch gefärbten DNA das der unspezifischen Einfärbung der geschützten DNA weit übertrifft.

## Patentansprüche

1. Polymer-Schichtverbund bestehend aus einem Substrat auf dem eine vollständige oder strukturierte Goldschicht vorhanden ist, die wiederum mindestens teilweise von einer strukturierbaren Aminoterpolymerschicht bedeckt ist und darauf wiederum mindestens teilweise Biomoleküle mindestens ortsspezifisch immobilisiert sind, wobei das oder die Polymere der Aminoterpolymerschicht Haftgruppen und geschützte Aminogruppen enthält und weiterhin mindestens mittels UV-Strahlung entschützte Aminogruppen im Aminoterpolymer vorhanden sind, an die Biomoleküle mittels chemischer und/oder physikalischer Bindungen immobilisiert sind.

2. Polymer-Schichtverbund nach Anspruch 1, bei dem als Substrat Glas, Metall, Silicium oder Keramik vorhanden ist.

3. Polymer-Schichtverbund nach Anspruch 1, bei dem zwischen Substrat und Goldschicht eine Haftschicht vorhanden ist.

4. Polymer-Schichtverbund nach Anspruch 3, bei dem die Haftschicht eine Chromschicht ist.

5. Polymer-Schichtverbund nach Anspruch 1, bei dem die Goldschicht gleichzeitig als Elektrode eingesetzt ist.

6. Polymer-Schichtverbund nach Anspruch 1, bei dem die Polymerschicht als Haftgruppe Tiol, Disulfid, oder andere schwefelhaltige Ankergruppen enthält.

7. Polymer-Schichtverbund nach Anspruch 1, bei dem die Polymerschicht als entschützte Aminogruppen primäre, aliphatische Aminogruppen enthält.

8. Polymer-Schichtverbund nach Anspruch 1, bei dem mittels UV-Strahlung strukturierte Bereiche mit entschützten Aminogruppen vorhanden sind.

9. Polymer-Schichtverbund nach Anspruch 1, bei dem die Strukturierung der Goldschicht nur teilweise oder gar nicht mit der Strukturierung der Bereiche der entschützten Aminogruppen übereinstimmt.

10. Polymer-Schichtverbund nach Anspruch 1, bei dem als Biomoleküle DNA, Proteine oder Enzyme immobilisiert sind.

11. Polymer-Schichtverbund nach Anspruch 1, bei dem die Biomoleküle endspezifisch an den entschützten Aminogruppen immobilisiert sind.

12. Polymer-Schichtverbund nach Anspruch 1, bei dem beide Enden der Biomoleküle endspezifisch auf gleiche oder unterschiedliche Bereiche der strukturierten entschützten Aminogruppen immobilisiert sind.

13. Polymer-Schichtverbund nach Anspruch 1, bei dem die Anbindung des Aminoterpolymers mittels elektrostatischer Wechselwirkungen und/oder über eine Schwefelbrückenbindung an die Goldoberfläche erfolgt.

14. Polymer-Schichtverbund nach Anspruch 1, bei dem die Anbindung der Biomoleküle mittels elektrostatischer Wechselwirkung oder mittels Ausbildung einer Amid-Bindung erfolgt

15. Verfahren zur Herstellung eines Polymer-Schichtverbund nach mindestens einem der Ansprüche 1 bis 14, bei dem auf ein Substrat ein Goldschicht aufgebracht wird, diese mit einer Aminoterpolymerschicht beschichtet, nachfolgend die Oberfläche teilweise einer UV-Strahlung ausgesetzt wird und danach Biomoleküle mit der bestrahlten Oberfläche in Kontakt gebracht werden.

16. Verfahren nach Anspruch 15, bei dem die Goldschicht strukturiert aufgebracht wird.

17. Verfahren nach Anspruch 15, bei dem die Strukturierung der Goldschicht durch Bedampfen, CVD-Verfahren, Tauchen, Besprühen mittels einer Maske durchgeführt wird.

18. Verfahren nach Anspruch 15, bei dem die Goldschicht in Dicken von 2 bis 200 nm aufgebracht wird.

19. Verfahren nach Anspruch 15, bei dem die Aminoterpolymerschicht nur auf die Goldschicht oder nur auf die strukturierte Goldschicht oder nur teilweise auf die Goldschicht aufgebracht wird.

20. Verfahren nach Anspruch 15, bei dem die Aminoterpolymerschicht in Dicken von 1 bis 50 nm aufgebracht wird.

21. Verfahren nach Anspruch 15, bei dem die UV-Bestrahlung der Oberfläche der Aminoterpolymerschicht mittels einer Maske strukturiert durchgeführt wird.

22. Verfahren nach Anspruch 15, bei dem die UV-Bestrahlung mit UV-Licht einer Wellenlänge von 200-400 nm und innerhalb einer Zeit von 1 s bis 30 min durchgeführt wird.

23. Verfahren nach Anspruch 15, bei dem die bestrahlte Oberfläche der Aminoterpolymerschicht mittels Besprühen, Bedampfen, Tauchen mit Biomolekülen in Kontakt gebracht wird.

24. Verfahren nach Anspruch 15, bei dem die Biomoleküle in einer Lösung mit der bestrahlten Oberfläche in Kontakt gebracht werden.

25. Verfahren nach Anspruch 15, bei dem die endspezifische Immobilisierung der Biomoleküle über den pH-Wert des Kontaktmediums mit der bestrahlten Oberfläche gesteuert wird.

26. Verwendung des Polymer-Schichtverbundes nach mindestens einem der Ansprüche 1 bis 14 und hergestellt nach mindestens einem der Ansprüche 15 bis 25 als Bio-Chip, DNA-Chip, Sensor oder Analyse-Array oder als Bestandteil eines Bio-Chips, DNA-Chips, Sensors oder Analyse-Arrays oder zur Hybridisierung von DNA-Oligimeren oder von DNA-Netzwerken oder in der molekularen Elektronik.

27. Verwendungen nach Anspruch 26 für den Nachweis der Immobilisierung mittels SPR und/oder massensensitiver Piezo-Sensoren.

28. Verwendungen nach Anspruch 26 für den Fall, dass es sich bei dem zu analysierenden Signal um die Hybridisierung von DNA-Oligomeren handelt.

29. Verwendungen nach Anspruch 26 für die Herstellung von DNA-Netzwerken an Goldkontakten.
